# EUROPEAN PATENT APPLICATION

(11) **EP 4 529 199 A2**
(43) Date of publication of application: **26.03.2025**
(21) Application number: 25154119.9
(22) Date of filing: 27.01.2025
(51) Int. Cl.: H04N 21/854, G11B 27/031

(54) **METHOD, APPARATUS, DEVICE AND STORAGE MEDIUM FOR GENERATING MEDIA CONTENT**

(30) Priority: 21.05.2024 CN 202410635356
(71) Applicant: BEIJING YOUZHUJU NETWORK TECHNOLOGY CO. LTD., Beijing 101299 (CN)
(72) Inventor: Zeng, Yan, Beijing,, 100028 (CN); Wei, Guoqiang, Beijing,, 100028 (CN); Li, Yifu, Beijing,, 100028 (CN); Chen, Xiaoya, Beijing,, 100028 (CN); Lu, Qiang, Beijing,, 100028 (CN); Li, Zheng, Beijing,, 100028 (CN); Luo, Manping, Beijing,, 100028 (CN)
(74) Representative: Grünecker Patent- und Rechtsanwälte PartG mbB

(57) **Abstract**

Embodiments of the disclosure provide a method, an apparatus, a device and a storage medium for generating media content. The method includes: presenting a configuration interface based on a selection of first media content, the configuration interface including an input control for inputting a prompt item; acquiring a target prompt item via the input control; and generating second media content, the second media content including a first segment and a second segment, the first segment corresponding to the first media content, and the second segment generated based on a target image in the first media content and the target prompt item. In this manner, the disclosure ensures a strong correlation between the first media content and the second media content, and can achieve flexibility in media content generation and improve the quality of media content generation.

## Description

### FIELD

Example embodiments of the present disclosure generally relate to the field of computers, and in particular, to a method, an apparatus, a device and a computer-readable storage medium for generating media content.

### BACKGROUND

With the rapid development of intelligence, various forms of electronic devices can greatly enrich people's daily lives. For example, a user may generate media content based on some electronic devices. How to generate media content is a focus of attention.

### SUMMARY

In a first aspect of the present disclosure, a method for generating media content is provided. The method includes: presenting a configuration interface based on a selection of first media content, the configuration interface including an input control for inputting a prompt item; acquiring a target prompt item via the input control; and generating second media content, the second media content including a first segment and a second segment, the first segment corresponding to the first media content, and the second segment generated based on a target image in the first media content and the target prompt item.

In a second aspect of the present disclosure, an apparatus for generating media content is provided. The apparatus includes: a first presenting module configured to present a configuration interface based on a selection of first media content, the configuration interface including an input control for inputting a prompt item; a first acquiring module configured to acquire a target prompt item via the input control; and a first generating module configured to generate second media content, the second media content including a first segment and a second segment, the first segment corresponding to the first media content, and the second segment generated based on a target image in the first media content and the target prompt item.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this section is not intended to identify key or important features of the embodiments of the present disclosure, nor is it intended to limit the scope of the present disclosure. Other features of the present disclosure will become readily apparent from the following description.

### BRIEF DESCRIPTION OF DRAWINGS

The above and other features, advantages and aspects of the embodiments of the present disclosure will become more apparent when taken in conjunction with the drawings and with reference to the following detailed description. In the drawings, the same or similar reference numerals refer to the same or similar elements, where:
FIG. 1 illustrates a schematic diagram of an example environment in which the embodiments of the present disclosure can be implemented;
FIG. 2A to FIG. 2D illustrate schematic diagrams of example interfaces according to some embodiments of the present disclosure;
FIG. 3 illustrates a flowchart of a process of generating media content according to some embodiments of the present disclosure;
FIG. 4 illustrates a schematic structural block diagram of an apparatus for generating media content according to some embodiments of the present disclosure; and
FIG. 5 illustrates a block diagram of an electronic device capable of implementing a plurality of embodiments of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein, rather, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the headings of any sections/subsections provided herein are not limiting. Various embodiments are described throughout this specification, and any type of embodiments may be included under any section/subsection. In addition, the embodiments described in any section/subsection may be combined in any manner with any other embodiments described in the same section/subsection and/or different sections/subsections.

In the description of the embodiments of the present disclosure, the term "include/comprise" and similar terms should be understood as open-ended inclusions, that is, "include/comprise but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may be included below. The terms "first", "second", etc. may refer to different or the same objects. Other explicit and implicit definitions may be included below.

The embodiments of the present disclosure may involve user data, acquisition and/or use of data, etc. These aspects are subject to corresponding laws, regulations and related provisions. In the embodiments of the present disclosure, all data collection, acquisition, processing, machining, forwarding, use, etc. are performed with the user's knowledge and confirmation. Accordingly, when implementing the embodiments of the present disclosure, the user should be informed of the type, use scope, use scenario, etc. of data or information that may be involved and obtain the user's authorization in an appropriate manner in accordance with relevant laws and regulations. The specific manner of informing and/or authorizing may vary according to actual situations and application scenarios, and the scope of the present disclosure is not limited in this regard.

If the solutions in the present specification and embodiments involve personal information processing, the processing will be performed on the premise of having a legal basis (for example, obtaining the consent of a personal information subject, or being necessary for performing a contract, etc.), and will only be performed within a specified or agreed scope. The user's refusal to process personal information other than necessary information required for basic functions will not affect the user's use of the basic functions.

An embodiment of the present disclosure provides a solution for generating media content. According to the solution, a configuration interface may be presented based on a selection of first media content, the configuration interface including an input control for inputting a prompt item; a target prompt item is acquired via the input control; and second media content is generated, the second media content including a first segment and a second segment, the first segment corresponding to the first media content, and the second segment generated based on a target image in the first media content and the target prompt item.

In this manner, the embodiments of the present disclosure may generate, on the basis of the first media content, the second media content including the first segment corresponding to the first media content and the second segment associated with the first media content, ensuring a strong correlation between the first media content and the second media content. In addition, the second segment may be generated by inputting the target prompt item in the present disclosure, which can achieve flexibility in media content generation and improve the quality of media content generation.

### EXAMPLE ENVIRONMENT

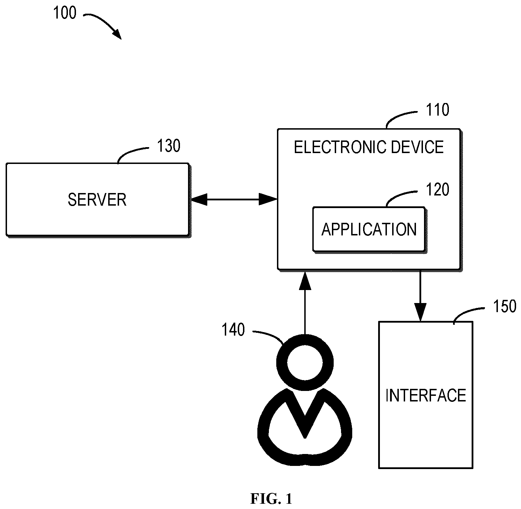

FIG. 1 illustrates a schematic diagram of an example environment 100 in which the embodiments of the present disclosure can be implemented. As shown in FIG. 1, the example environment 100 may include an electronic device 110.

In the example environment 100, the electronic device 110 may run an application 120 that supports interface interaction. The application 120 may be any suitable type of application for interface interaction. A user 140 may generate media content based on the application 120. Specifically, the media content generated by the user 140 based on the application 120 may be second media content that is generated on the basis of first media content and that is strongly related to the first media content. As an example, the electronic device 110 may support extending a video on the basis of the first media content to generate the second media content that is strongly related to the first media content. As an example, the user 140 may interact with the application 120 via the electronic device 110 and/or its attached device.

In the environment 100 of FIG. 1, if the application 120 is in an active state, the electronic device 110 may present an interface 150 for supporting interface interaction through the application 120. The interface 150 may be an interface for generating media content.

In some embodiments, the electronic device 110 communicates with a server 130 to implement supply of services for the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (Personal Communication System, PCS) device, a personal navigation device, a personal digital assistant (Personal Digital Assistant, PDA), an audio/video player, a digital camera/camcorder, a positioning device, a television receiver, a radio broadcast receiver, an e-book device, a game device or any combination thereof, including accessories and peripherals of these devices or any combination thereof. In some embodiments, the electronic device 110 may also support any type of interface (such as a "wearable" circuit, etc.) for a target user.

The server 130 may be an independent physical server, or a server cluster or a distributed system composed of a plurality of physical servers, or a cloud server that provides basic cloud computing services such as cloud services, cloud databases, cloud computing, cloud functions, cloud storage, network services, cloud communication, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the application 120 that supports interface interaction in the electronic device 110.

A communication connection may be established between the server 130 and the electronic device 110. The communication connection may be established through a wired manner or a wireless manner. The communication connection may include, but is not limited to, a Bluetooth connection, a mobile network connection, a universal serial bus (Universal Serial Bus, USB) connection, a wireless fidelity (Wireless Fidelity, Wi-Fi) connection, etc., and the embodiments of the present disclosure are not limited in this regard. In the embodiments of the present disclosure, the server 130 and the electronic device 110 may implement signaling interaction through the communication connection therebetween.

It should be understood that the structure and function of the various elements in the environment 100 are described for illustrative purposes only, and are not intended to imply any limitation to the scope of the present disclosure.

Some example embodiments of the present disclosure will be described below with continued reference to the drawings.

### EXAMPLE INTERACTION

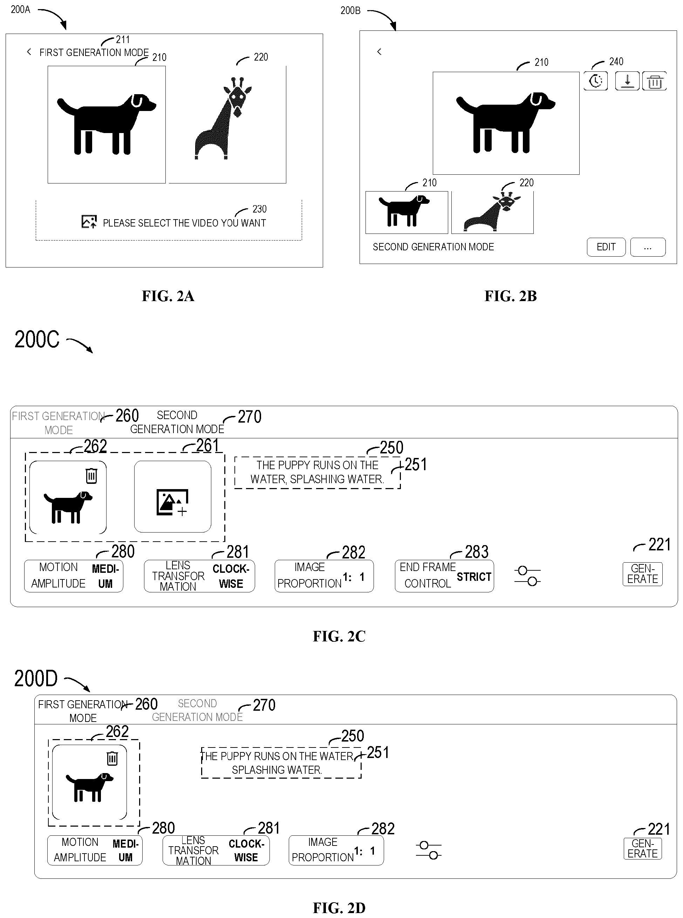

An example interaction process according to an embodiment of the present disclosure will be described below with reference to FIG. 2A to FIG. 2D. FIG. 2A to FIG. 2D illustrate example interfaces 200A to 200D according to some embodiments of the present disclosure, and the interfaces 200A to 200D may be provided by, for example, the electronic device 110 shown in FIG. 1.

As shown in FIG. 2A, the electronic device 110 may present, for example, the interface 200A, and a group of candidate media content, such as candidate media content 210 and candidate media content 220, may be displayed in the interface 200A. A media content selection control 230 is further displayed in the interface 200A, to support that the user 140 may select the first media content from the candidate media content 210 and the candidate media content 220. As an example, the user 140 may drag the candidate media content 210 to be selected into the media content selection control 230 in a dragging manner, and at this time, the electronic device 110 may determine the candidate media content 210 to be the selected first media content.

As another example, the candidate media content 210 and the candidate media content 220 may be generated based on a group of parameters. The electronic device 110 may receive a selection of the candidate media content 210 to determine the selected candidate media content 210 as the selected first media content.

As an example, the electronic device may determine the candidate media content 210 as the selected first media content in response to an extension button corresponding to the candidate media content 210 selected. The extension button is used to support generating a new segment of media content on the basis of the selected media content, to extend the selected media content, and the positional relationship between the new media content and the selected media content may be set according to requirements.

As shown in FIG. 2B, the electronic device 110 may further present, for example, the interface 200B, and the interface 200B may include a media content playing region 240. The media content playing region 240 is used to play the candidate media content 210 and the candidate media content 220 in turn. The interface 200B further includes a generating control 240. When the candidate media content 210 is being played in the interface 200B, the electronic device 110 may determine the candidate media content 210 as the selected first media content in response to the generation control 240 selected.

It should be noted that the media content involved in the present disclosure may be any suitable form of media content, such as a video, an image, an audio, etc., which will not be repeated here.

In some embodiments, the electronic device 110 may present a configuration interface based on a selection of first media content, where the configuration interface may include an input control for inputting a prompt item. Taking FIG. 2C as an example, in response to the candidate media content 210 in the interface 200A or the interface 200B selected, an input control 250 for inputting a prompt item may be presented in the interface 200C (configuration interface) of the electronic device, to support that the user 140 may input a target prompt item based on the input control 250, and at this time, the electronic device 110 may acquire the target prompt item via the input control.

After acquiring the target prompt item, the electronic device 110 may generate second media content, the second media content including a first segment and a second segment, the first segment corresponding to the first media content, and the second segment generated based on a target image in the first media content and the target prompt item. The first segment may be an entire segment corresponding to the first media content, or may be a partial segment corresponding to the first media content. The target image may be an image at any suitable position in the first media content, and may be, for example, a start frame, an intermediate frame, an end frame, etc. in the first media content, which may be specifically set according to requirements.

In some embodiments, a candidate prompt item corresponding to generating the first media content may also be displayed at the input control for inputting the prompt item in the configuration interface. Taking FIG. 2C as an example, a candidate prompt item 251 corresponding to the candidate media content 210 may be displayed at the input control 250.

In some embodiments, the electronic device 110 may use the candidate prompt item 251 corresponding to the candidate media content 210 as the target prompt item for generating the second media content, so that the electronic device 110 may generate the second media content based on the target prompt item. For example, the user 140 may not modify the candidate prompt item 251 corresponding to the candidate media content 210 displayed at the input control 250, but directly click on the generation control 221 in the interface 200C. At this time, the electronic device 110 may determine the candidate prompt item 260 as the target prompt item to generate the second segment.

In other embodiments, the candidate prompt item 251 corresponding to the candidate media content 210 displayed at the input control 250 may also support being modified. The electronic device 110 may determine the modified candidate prompt item as the target prompt item for generating the second media content in response to the candidate prompt item 251 being modified, to generate the second segment.

In some embodiments, the user 140 may also select the generation mode of the second segment, where different generation modes correspond to different generation manners of generating the second segment. The electronic device 110 may receive a selection of a target generation mode and present a configuration interface corresponding to the target generation mode.

As shown in FIG. 2C, the interface 200C may further include a first selection control 260 corresponding to a first generation mode and a second selection control 270 corresponding to a second generation mode, to support that the user 140 may select the generation mode of the second segment.

In some embodiments, the electronic device 110 may present the configuration interface corresponding to the first generation mode in response to the first selection control 260 selected. The configuration interface includes an image control. As shown in FIG. 2C, the interface 200C may include an image control 261, to support that the user 140 may import an image for generating the second segment. In some embodiments, the electronic device 110 may acquire at least one reference image via the image control 261. The electronic device 110 may generate the second segment based on the target image, the target prompt item and the at least one reference image. In some embodiments, the second segment includes at least one video frame corresponding to the at least one reference image. The at least one video frame is located at different positions in the second segment, and may be determined based on the configuration operation of the user 140. For example, the at least one video frame includes a video frame A and a video frame B, and the user 140 may configure the video frame A as an intermediate frame of the second segment, and configure the video frame B as an end frame of the second segment, etc.

In some embodiments, if the configuration interface corresponds to the first generation mode, the electronic device 110 may determine a reference start frame of the segment to be generated based on the target image. The electronic device 110 may also determine a reference end frame of the segment to be generated based on the at least one reference image. The electronic device 110 may generate the second segment based on the reference start frame, the reference end frame and the target prompt item. Taking FIG. 2C as an example, the electronic device 110 may use the end frame of the candidate media content 210 as the target image 262, use the target image 262 as the reference start frame of the segment to be generated, use the reference image 261 input based on the image control 260 as the reference end frame of the segment to be generated, and generate the second segment based on the target image 262, the reference image 261 and the target prompt item 251.

In some embodiments, the electronic device 110 may present the configuration interface corresponding to the second generation mode in response to the second selection control 270 selected. The electronic device 110 may determine the reference start frame of the segment to be generated based on the target image, and generate the second segment based on the reference start frame and the target prompt item. Taking FIG. 2D as an example, the electronic device 110 may use the end frame of the candidate media content 210 as the target image 262, use the target image 262 as the reference start frame of the segment to be generated, and generate the second segment based on the target image 262 and the target prompt item 251.

In some embodiments, the configuration interface of the electronic device 110 may further include a target input component, to support that the user 140 may set at least one media parameter for generating the second segment. In some embodiments, the at least one media parameter may include, but is not limited to, at least one of: a first media parameter, a second media parameter, and a third media parameter. The first media parameter is used to indicate the motion amplitude of the segment to be generated, the second media parameter is used to indicate the lens information of the segment to be generated, and the third media parameter is used to indicate the proportional information of the segment to be generated.

Taking FIG. 2C as an example, the target input component that may be included in the interface 200C is an input component 280 corresponding to the motion amplitude, an input component 281 corresponding to the lens transformation, an input component 282 corresponding to the image proportion, and an input component 283 corresponding to the end frame control.

For example, the input component 280 corresponding to the motion amplitude is used to support the user to input the first media parameter indicating the motion amplitude of the segment to be generated. The input component 281 corresponding to the lens transformation is used to support the user to input the second media parameter indicating the lens information of the segment to be generated. The input component 282 corresponding to the image proportion is used to support the user to input the third media parameter indicating the proportional information of the segment to be generated. The input component 283 corresponding to the end frame control is used to support the user to select a target control mode of the end frame of the segment to be generated, that is, the degree to which the end frame is subject to the segment to be generated. As an example, when the user selects strict compliance, the end frame image of the segment to be generated will be the same as the uploaded end frame image. When the user selects not to comply strictly, the end frame of the segment to be generated is allowed to have more room for play.

In some embodiments, the electronic device 110 may acquire the at least one media parameter via the target input component, so that the second segment is also generated based on the at least one media parameter.

In some embodiments, the electronic device 110 may also generate the second segment based on a candidate media parameter corresponding to the first media content, that is, the first media content and the second segment correspond to the same media parameter. In other embodiments, a candidate media parameter corresponding to the first media content may also be displayed at the target input component in the target interface of the electronic device 110. The electronic device 110 may determine the modified candidate media parameter as the target media parameter in response to the candidate media parameter modified. The electronic device 110 may generate the second segment based on the target media parameter, that is, the first media content and the second segment may also correspond to different media parameters.

Returning to FIG. 2A or FIG. 2B, the candidate media content 210 and the candidate media content 220 may also be media content generated in the first generation mode, or may be media content generated based on the second generation mode. Taking FIG. 2A or FIG. 2B as an example, identification information corresponding to the generation mode of generating the candidate media content 210 and the candidate media content 220 may also be displayed in the interface 200A or the interface 200B. For example, the generation mode corresponding to the candidate media content 210 and the candidate media content 220 displayed in the interface 200A is the identification 211 corresponding to the first generation mode.

In this manner, the embodiments of the present disclosure may generate, on the basis of the first media content, the second media content including the first segment corresponding to the first media content and the second segment, where the second segment is generated based on the target prompt item and the target image in the first media content, which not only ensures a strong correlation between the first media content and the second media content, but also achieves flexibility in media content generation.

### EXAMPLE PROCESS

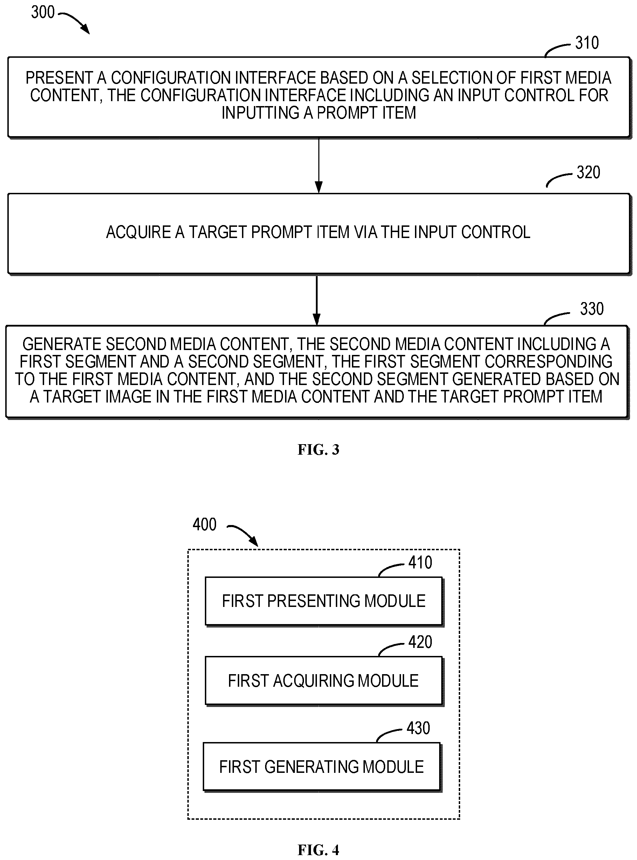

FIG. 3 illustrates a flowchart of a process 300 of generating media content according to some embodiments of the present disclosure. The process 300 may be implemented at the electronic device 110. The process 300 is described below with reference to FIG. 1.

At block 310, the electronic device 110 presents a configuration interface based on a selection of first media content, the configuration interface including an input control for inputting a prompt item.

At block 320, the electronic device 110 acquires a target prompt item via the input control.

At block 330, the electronic device 110 generates second media content, the second media content including a first segment and a second segment, the first segment corresponding to the first media content, and the second segment generated based on a target image in the first media content and the target prompt item.

In some embodiments, presenting the configuration interface includes: receiving a selection of a target generation mode; and presenting the configuration interface corresponding to the target generation mode.

In some embodiments, the configuration interface corresponds to a first generation mode, the configuration interface further includes an image control, and the process 300 further includes: acquiring at least one reference image via the image control; and generating the second segment based on the target image, the target prompt item and the at least one reference image.

In some embodiments, the second segment includes at least one video frame corresponding to the at least one reference image.

In some embodiments, a location of the at least one video frame in the second segment is determined based on a configuration operation of a user.

In some embodiments, generating the second segment based on the target image, the target prompt item and the at least one reference image includes: determining a reference start frame of the segment to be generated based on the target image; determining a reference end frame of the segment to be generated based on the at least one reference image; and generating the second segment based on the reference start frame, the reference end frame and the target prompt item.

In some embodiments, the configuration interface corresponds to a second generation mode, and the process 300 further includes: determining a reference start frame of the segment to be generated based on the target image; and generating the second segment based on the reference start frame and the target prompt item.

In some embodiments, the configuration interface further includes a target input component, and the process 300 further includes: acquiring at least one media parameter via the target input component, so that the second segment is also generated based on the at least one media parameter.

In some embodiments, the at least one media parameter includes at least one of: a first media parameter, used to indicate a motion amplitude of the segment to be generated; a second media parameter, used to indicate lens information of the segment to be generated; and a third media parameter, used to indicate proportional information of the segment to be generated.

In some embodiments, the process 300 further includes: displaying a candidate prompt item corresponding to generating the first media content at the input control for inputting the prompt item in the configuration interface; and determining the modified candidate prompt item as the target prompt item in response to the candidate prompt item being modified.

In some embodiments, the process 300 further includes: presenting at least one piece of media content generated based on a group of parameters; and receiving the selection of the first media content from the at least one piece of media content.

### EXAMPLE APPARATUS AND DEVICE

The embodiments of the present disclosure further provide apparatuses for implementing the above methods or processes. FIG. 4 illustrates a schematic structural block diagram of an apparatus 400 for generating media content according to some embodiments of the present disclosure. The apparatus 400 may be implemented as or included in the electronic device 110 as discussed above. The various modules/components in the apparatus 400 may be implemented by hardware, software, firmware, or any combination thereof.

As shown in FIG. 4, the apparatus 400 includes a first presenting module 410 configured to present a configuration interface based on a selection of first media content, the configuration interface including an input control for inputting a prompt item; a first acquiring module 420 configured to acquire a target prompt item via the input control; and a first generating module 430 configured to generate second media content, the second media content including a first segment and a second segment, the first segment corresponding to the first media content, and the second segment being generated based on a target image in the first media content and the target prompt item. In some embodiments, presenting the configuration interface includes: receiving a selection of a target generation mode; and presenting the configuration interface corresponding to the target generation mode.

In some embodiments, the configuration interface corresponds to a first generation mode, the configuration interface further includes an image control, and the apparatus 400 further includes a second acquiring module configured to: acquire at least one reference image via the image control; and a second generating module configured to generate the second segment based on the target image, the target prompt item and the at least one reference image.

In some embodiments, the second segment includes at least one video frame corresponding to the at least one reference image.

In some embodiments, a location of the at least one video frame in the second segment is determined based on a configuration operation of a user.

In some embodiments, the second generating module is further configured to determine the reference start frame of the segment to be generated based on the target image; determine the reference end frame of the segment to be generated based on the at least one reference image; and generate the second segment based on the reference start frame, the reference end frame and the target prompt item.

In some embodiments, the configuration interface corresponds to the second generation mode, and the apparatus 400 further includes a determining module configured to: determine the reference start frame of the segment to be generated based on the target image; and a third generating module configured to: generate the second segment based on the reference start frame and the target prompt item.

In some embodiments, the configuration interface further includes a target input component, and the apparatus 400 further includes a third acquiring module configured to: acquire at least one media parameter via the target input component, so that the second segment is also generated based on the at least one media parameter.

In some embodiments, the at least one media parameter includes at least one of: a first media parameter, used to indicate the motion amplitude of the segment to be generated; a second media parameter, used to indicate the lens information of the segment to be generated; and a third media parameter, used to indicate the proportional information of the segment to be generated.

In some embodiments, the apparatus 400 further includes a displaying module configured to: display a candidate prompt item corresponding to generating the first media content at the input control for inputting the prompt item in the configuration interface; and a second determining module configured to: determine the modified candidate prompt item as the target prompt item in response to the candidate prompt item being modified.

In some embodiments, the apparatus 400 further includes a second presenting module configured to: present at least one piece of media content generated based on a group of parameters; and receive the selection of the first media content from the at least one piece of media content.

The units included in the apparatus 400 may be implemented in various manners, including software, hardware, firmware or any combination thereof. In some embodiments, one or more units may be implemented using software and/or firmware, such as machine-executable instructions stored on a storage medium. In addition to or as an alternative to machine-executable instructions, some or all of the units in the apparatus 400 may be implemented at least in part by one or more hardware logic components. By way of example and not limitation, example types of hardware logic components that may be used include a field programmable gate array (FPGA), an application specific integrated circuit (ASIC), an application specific standard product (ASSP), a system on chip (SOC), a complex programmable logic device (CPLD), and the like.

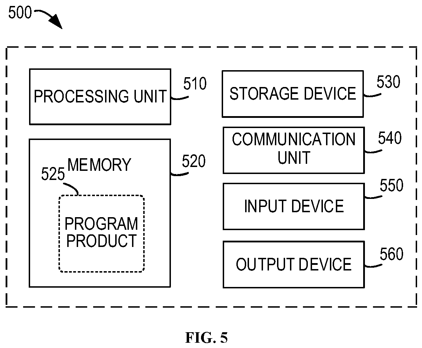

FIG. 5 illustrates a block diagram of an electronic device 500 in which one or more embodiments of the present disclosure may be implemented. It should be understood that the electronic device 500 shown in FIG. 5 is only an example, and should not constitute any limitation to the function and scope of the embodiments described herein. The electronic device 500 shown in FIG. 5 may be used to implement the electronic device 110 shown in FIG. 1.

As shown in FIG. 5, the electronic device 500 is in the form of a general-purpose electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and can perform various processing according to a program stored in the memory 520. In a multi-processor system, a plurality of processing units execute computer-executable instructions in parallel to improve the parallel processing capability of the electronic device 500.

The electronic device 500 typically includes a plurality of computer storage media. Such media may be any available media accessible by the electronic device 500, including but not limited to volatile and non-volatile media, removable and non-removable media. The memory 520 may be a volatile memory (e.g., register, cache, random access memory (RAM)), a non-volatile memory (e.g., read-only memory (ROM), electrically erasable programmable read-only memory (EEPROM), flash memory) or some combination thereof. The storage device 530 may be a removable or non-removable medium, and may include a machine-readable medium such as a flash drive, a magnetic disk or any other medium that may be used to store information and/or data (e.g., training data for training) and may be accessed within the electronic device 500.

The electronic device 500 may further include additional removable/non-removable, volatile/non-volatile storage media. Although not shown in FIG. 5, a disk drive for reading or writing from a removable, non-volatile disk (e.g., a "floppy disk") and an optical disk drive for reading or writing from a removable, non-volatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 implements communication with other electronic devices through a communication medium. Additionally, the functions of the components of the electronic device 500 may be implemented in a single computing cluster or a plurality of computing machines that can communicate through communication connections. Accordingly, the electronic device 500 may operate in a networked environment using logical connections to one or more other servers, network personal computers (PC) or another network node.

The input device 550 may be one or more input devices, such as a mouse, a keyboard, a trackball, etc. The output device 560 may be one or more output devices, such as a display, a speaker, a printer, etc. The electronic device 500 may also communicate with one or more external devices (not shown) as needed through the communication unit 540, communicate with external devices such as storage devices, display devices, etc., communicate with one or more devices that enable the user to interact with the electronic device 500, or communicate with any device that enables the electronic device 500 to communicate with one or more other electronic devices (e.g., a network card, a modem, etc.). Such communication may be performed via an input/output (I/O) interface (not shown).

According to an example implementation of the present disclosure, a computer-readable storage medium is provided, which has computer-executable instructions stored thereon, where the computer-executable instructions are executed by a processor to implement the method described above. According to an example implementation of the present disclosure, a computer program product is further provided, and the computer program product is tangibly stored on a non-transitory computer-readable medium and includes computer-executable instructions, and the computer-executable instructions are executed by a processor to implement the method described above.

Various aspects of the present disclosure are described here with reference to flowcharts and/or block diagrams of the method, apparatus, device and computer program product implemented according to the present disclosure. It should be understood that each block of the flowcharts and/or block diagrams and combinations of blocks in the flowcharts and/or block diagrams may be implemented by computer-readable program instructions.

These computer-readable program instructions may be provided to a processing unit of a general-purpose computer, a dedicated computer or other programmable data processing apparatus, thereby producing a machine, so that the instructions, when executed by the processing unit of the computer or other programmable data processing apparatus, produce an apparatus for implementing the functions/acts specified in one or more blocks of the flowcharts and/or block diagrams. These computer-readable program instructions may also be stored in a computer-readable storage medium. These instructions cause the computer, programmable data processing apparatus and/or other devices to work in a specific manner, so that the computer-readable medium storing the instructions includes an article of manufacture, which includes instructions for implementing various aspects of the functions/acts specified in one or more blocks of the flowcharts and/or block diagrams.

The computer-readable program instructions may be loaded onto a computer, other programmable data processing apparatus or other devices to cause a series of operational steps to be performed on the computer, other programmable data processing apparatus or other devices to produce a computer-implemented process, such that the instructions executed on the computer, other programmable data processing apparatus or other devices implement the functions/acts specified in one or more blocks in the flowcharts and/or block diagrams.

The flowcharts and block diagrams in the drawings show possible architectures, functions and operations of the system, method and computer program product according to a plurality of implementations of the present disclosure. In this regard, each block in the flowcharts or block diagrams may represent a module, a program segment or a portion of instructions, and the module, the program segment or the portion of instructions contains one or more executable instructions for implementing specified logical functions. In some alternative implementations, the functions noted in the blocks may also occur out of the order noted in the figures. For example, two blocks shown in succession may, in fact, be executed substantially concurrently, or the blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or acts, or may also be implemented by a combination of special purpose hardware and computer instructions.

Various implementations of the present disclosure have been described above, and the above description is illustrative, not exhaustive, and is not limited to the disclosed implementations. Without departing from the scope and spirit of the described implementations, many modifications and variations will be apparent to those skilled in the art. The selection of terms used herein is intended to best explain the principles, practical applications or improvements in the technology in the market, or to enable other ordinary skilled in the art to understand the implementations disclosed herein.

## Claims

1. A method (300) for generating media content, comprising:
presenting (310) a configuration interface based on a selection of first media content, the configuration interface comprising an input control for inputting a prompt item;
acquiring (320) a target prompt item via the input control; and
generating (330) second media content, the second media content comprising a first segment and a second segment, the first segment corresponding to the first media content, and the second segment generated based on a target image in the first media content and the target prompt item.

2. The method (300) according to claim 1, wherein presenting the configuration interface comprises:
receiving a selection of a target generation mode; and
presenting the configuration interface corresponding to the target generation mode.

3. The method (300) according to claim 1, wherein the configuration interface corresponds to a first generation mode, the configuration interface further comprises an image control, and the method further comprises:
acquiring at least one reference image via the image control; and
generating the second segment based on the target image, the target prompt item and the at least one reference image.

4. The method (300) according to claim 3, wherein the second segment comprises at least one video frame corresponding to the at least one reference image.

5. The method (300) according to claim 4, wherein a location of the at least one video frame in the second segment is determined based on a configuration operation of a user.

6. The method (300) according to claim 3, wherein generating the second segment based on the target image, the target prompt item and the at least one reference image comprises:
determining a reference start frame of the segment to be generated based on the target image;
determining a reference end frame of the segment to be generated based on the at least one reference image; and
generating the second segment based on the reference start frame, the reference end frame and the target prompt item.

7. The method (300) according to claim 1, wherein the configuration interface corresponds to a second generation mode, and the method further comprises:
determining a reference start frame of the segment to be generated based on the target image; and
generating the second segment based on the reference start frame and the target prompt item.

8. The method (300) according to claim 1, wherein the configuration interface further comprises a target input component, and the method further comprises:
acquiring at least one media parameter via the target input component, such that the second segment is generated further based on the at least one media parameter.

9. The method (300) according to claim 8, wherein the at least one media parameter comprises at least one of:
a first media parameter, used to indicate a motion amplitude of the segment to be generated;
a second media parameter, used to indicate lens information of the segment to be generated; and
a third media parameter, used to indicate proportional information of the segment to be generated.

10. The method (300) according to claim 1, further comprising:
displaying a candidate prompt item corresponding to generating the first media content at the input control for inputting the prompt item in the configuration interface; and
determining the modified candidate prompt item as the target prompt item in response to the candidate prompt item being modified.

11. The method (300) according to claim 1, further comprising:
presenting at least one piece of media content generated based on a group of parameters; and
receiving the selection of the first media content from the at least one piece of media content.

12. An apparatus (400) for generating media content, comprising:
a first presenting module (410) configured to present a configuration interface based on a selection of first media content, the configuration interface comprising an input control for inputting a prompt item;
a first acquiring module (420) configured to acquire a target prompt item via the input control; and
a first generating module (430) configured to generate second media content, the second media content comprising a first segment and a second segment, the first segment corresponding to the first media content, and the second segment generated based on a target image in the first media content and the target prompt item.

13. An electronic device (500), comprising:
at least one processing unit (510); and
at least one memory (520) coupled to the at least one processing unit (510) and storing instructions for execution by the at least one processing unit (510), the instructions, when executed by the at least one processing unit (510), causing the device to perform the method according to any of claims 1 to 11.

14. A computer-readable storage medium having a computer program stored thereon, wherein the computer program, when executed by a processor, implements the method according to any of claims 1 to 11.
